# EUROPEAN PATENT SPECIFICATION

(11) **EP 2 475 193 B1**
(45) Date of publication and mention of the grant of the patent: **08.01.2014**
(21) Application number: 11150269.6
(22) Date of filing: 05.01.2011
(51) Int. Cl.: H04S 7/00, H04S 3/00

(54) **Method for playing a multimedia content comprising audio and stereoscopic video**
Verfahren zum Abspielen eines Multimedia-Inhalts mit Audio- und Stereoskop-Video
Procédé pour la lecture d'un contenu multimédia comprenant l'audio et la vidéo stéréoscopique

(43) Date of publication of application: 11.07.2012
(73) Proprietor: Advanced Digital Broadcast S.A., 1292 Chambesy (CH)
(72) Inventor: Paczkowski, Jacek, 65-119 Zielona Góra (PL)
(74) Representative: Borsano, Corrado

(56) References cited:
- US-A- 5 959 597
- US-A1- 2002 159 629
- US-A1- 2004 240 686
- US-A1- 2009 128 617
- US-A1- 2010 328 419

## Description

### TECHNICAL FIELD

The present invention relates to multimedia systems, in particular to methods for playing a multimedia content comprising audio and stereoscopic video. In particular, the invention relates to a method according to the preamble of claim 1 and to a device adapted to implement this method.

### BACKGROUND ART

Nowadays stereoscopic contents, also known as 3D contents, are becoming more and more popular. 3D contents, like movies or live events, are broadcasted for example by satellite and terrestrial TV channels or distributed by Blu-Ray discs or Internet for home video entertainment.

As it is known, human brain perceives objects' depth by combining the two images viewed by the right and left eye. In order to provide a viewer with the perception of images that have different visual depth with respect to the plane of the screen wherein the 3D content is displayed, the 3D content is constituted of two frame sequences (often called Left and Right frames) intended for different eyes of the viewer. Different systems, like shutter glasses or polarized glasses are used to let each eye of the user view the corresponding frame sequence.

As well as 2D movies or TV signals, 3D multimedia contents comprise both a video component (in this case the 3D video stream) and an audio component. The audio component comprises one or more audio tracks that can be delivered over a plurality of audio channels useful to create real and impressive audio effects, like in Dolby Surround® or in Dolby True HD® technologies.

Since the depth of an object in 3D video contents depends on the position of the object in the left and right video frame, during production or post-production of the 3D video content the two video frames are opportunely processed so as to generate the visual depth effect desired by the art director. Nevertheless, if the 3D content is viewed on screens of different size (e.g. 15 inches or 18 inches screen) the visual depth perception is different.

In order to address this problem, European patent application EP0751689 discloses a system that computes the binocular fusional range of the viewer viewing the screen used for displaying the stereoscopic image of an object, on the basis of pre-entered parameters consisting at least of the size of the screen and the viewing distance between the screen and the viewer.

The inventor has noticed that even if the visual depth perception changes with different screen sizes, the perception of the distance of sound sources remains unchanged and may not be coherent with the current depth perception, in particular if the stereoscopic content was created for screens having sizes very different from the viewer's screen size. This mismatching between visual depth perception and sound distance perception causes not realistic effects to audio tracks reproduction.

There's therefore the need for an audio-video system which allows reproduction of stereoscopic contents in a more realistic way.

US2010/328419-A1 shows a system for relocating the audio source point in a video teleconferencing system, depending on the actual screen size and therefore of its diagonal, with respect to the original screen size reference. A trigonometric calculation is performed of the angles between the real position of the user and the virtual sound source, then the position is rescaled in depth and angle depending on the actual size of the screen of the user, and a new position of the virtual origin of the sound is obtained.

### SUMMARY OF THE INVENTION

In one aspect, the present invention is directed to an audio-video system, and in particular to stereoscopic audio-video system, which overcomes one, some or all of the drawbacks of prior-art devices and/or systems and/or methods for playing multimedia contents comprising 3D video contents.

In particular, it is an object of the present invention to present a method and a relative apparatus for playing multimedia contents comprising an audio component and a 3D video component, which provides a better viewing experience in a viewer.

The invention is defined by the independent claims of this application. Preferred embodiments are specified in the dependent claims.

In one aspect, the invention is directed to a method for playing a multimedia content comprising a 3D video component and an audio component, wherein the 3D video component is processed so as to deliver a video signal on a video output to be displayed on a screen and wherein the audio component is processed so as to deliver audio tracks to a plurality of loudspeakers. The method provides for processing the audio component so as to deliver the plurality of audio tracks based on a parameter associated to the size of an image of the video signal displayed on said screen (1010).

This solution offers the advantage that audio can be adapted to the depth of objects perceived by the viewer. If the 3D video content is to be displayed on screen of bigger dimensions, thereby producing an increased visual depth perception, than audio tracks to be delivered to frontal loudspeakers can be anticipated so that sound arrives before to the viewer, therefore maintaining synchronization with the video. Alternatively control of the volume can be used to synchronize audio with a 3D video having changed depth perception.

In one aspect, processing of the audio component comprises the steps of storing (302) a plurality of temporary audio tracks (e.g. audio tracks received with the audio component or audio tracks generated locally based on the received audio component), modifying said audio tracks by time shifting at least one of said temporary audio tracks, delivering the modified audio tracks.

In one aspect, only a subset of the temporary audio tracks is time shifted.

In one aspect, the method provides for changing volume of at least one of the temporary audio tracks, so as to obtain a finest synchronization of audio and video. Balancing the volume of the audio tracks together with time shifting of one or more of them, can be used to increase movement perception of the audio source,

According to the invention this parameter is provided by a user, in particular a viewer of the video content. This solution has the advantage that it takes into consideration user's viewing preferences. As an example, in some case the viewer can operate a TV set to change the display format (e.g. 16:9 or 4:3 or letter box). This operation can cause the TV set to modify the image size.

In one aspect, the parameter used for time shifting the audio tracks is the size of a screen wherein the 3D content is to be displayed. This solution has the advantage that this parameter is more easily found by a user, who therefore can more easily set the audio video (A/V) unit in charge of playing the multimedia content.

In another aspect, the method provides for time shifting at least an audio track also based on a second parameter (e.g. the diagonal size of a screen) associated to a reference physical size of an image for which the multimedia content is optimized. Such a parameter can be retrieved from the multimedia content or can be provided by a user of the A/V unit in charge of playing the multimedia content.

According to the invention the method provides for retrieving a parallax parameter associated to the 3D video component, whereby said at least one audio track is time shifted also based on said parallax parameter. This solution allows a more fine synchronization of audio and video.

In one aspect, the invention is also directed to an audio-video unit comprising a receiving unit for receiving an audio component and a 3D video component of a multimedia content. The A/V unit comprises a video processor operatively connected to the receiving unit for processing the 3D video component and transmitting the processed video to an external device. Additionally the A/V unit comprises an audio processor operatively connected to the receiving unit for processing the audio component and to deliver audio tracks to a plurality of loudspeakers. A first memory area, operatively connected to a control unit, stores a parameter associated to the physical size of the video image to be displayed. The control unit is configured to control the audio processor so as to deliver the audio tracks, and in particular to time shift one of them, based on the stored parameter.

In one aspect, the A/V unit comprises a receiver for receiving inputs from a user and the control unit is adapted to control the audio processor and the video processor in order to implement the method of playing multimedia content as described above and in the following detailed description.

In one aspect, the invention is directed to a computer program comprising program code means for performing all the steps of the method described above (and in the following detailed description) when said program is run on a computer.

In one aspect, the invention is directed to a computer readable medium storing computer-executable instructions performing all the steps of the method described above (and in the following detailed description) when executed on a computer.

Notwithstanding the invention is described and illustrated herein with reference to a limited number of embodiments, it is understood that various combinations of the elements, decoders, units, computers, computer server, circuital and logic blocks, other than those specifically illustrated, are contemplated and are within the scope of the present invention which is defined by the attached claims forming integral part of the present description.

### BRIEF DESCRIPTION OF THE DRAWINGS

The invention will be presented here below with reference to non limiting examples, provided for explicative and non limitative reasons in the annexed drawings. These drawings illustrate different aspects and embodiments of the present invention and, where appropriate, reference numerals illustrating like structures, components, materials and/or elements in different figures are indicated by similar reference numbers.
Figure 1 illustrates a multimedia system according to a first exemplary embodiment of the invention.
Figure 2 illustrates a block scheme of an audio-video unit of the video system of figure 1.
Figure 3 illustrates a flowchart of a method for controlling the audio-video unit of figure 2.
Figure 4 illustrates perception of a 3D object on screens of different size.
Figure 5 illustrates a multimedia system according to a second exemplary embodiment of the invention.
Figure 6 illustrates a block scheme of a media center of the video system of figure 5.

### DETAILED DESCRIPTION OF THE PREFERRED EMBODIMENTS

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all constructions falling within the scope of the claims.

In the following description and in the figures, like elements are identified with like reference numerals. The use of "e.g.," "etc," and "or" indicates non-exclusive alternatives without limitation unless otherwise noted. The use of "including" means "including, but not limited to," unless otherwise noted.

The terms "stereoscopic video" and "3D video" are used as equivalents in the following description.

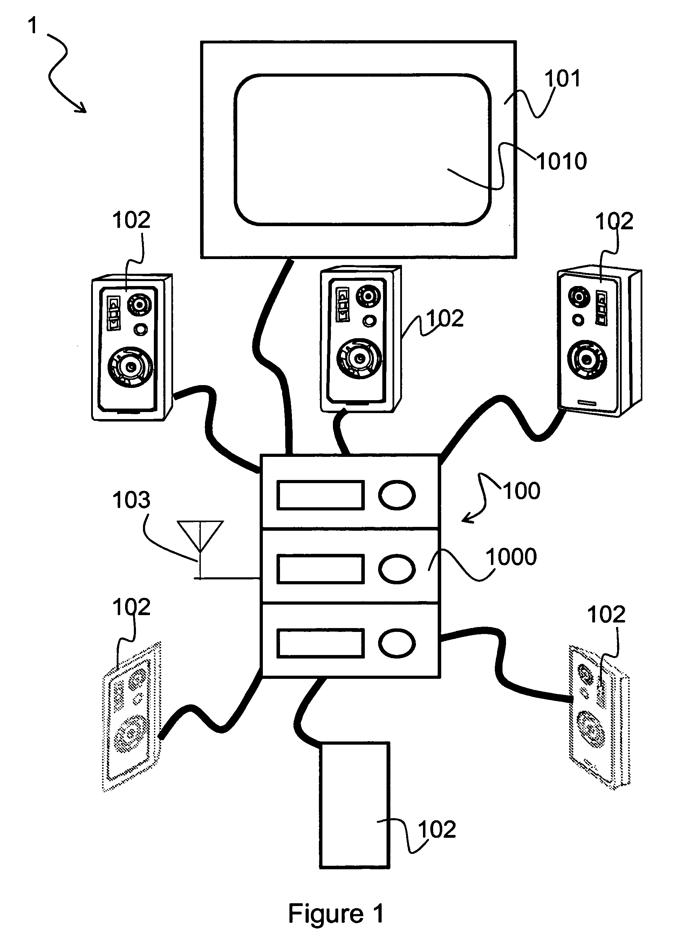

Figure 1 discloses a multimedia system 1 that allows a user to play multimedia contents, in particular multimedia contents that comprise a 3D video component and an audio component.

Multimedia system 1 comprises audio-video (A/V) components such as one or more media devices 100 (e.g. a DVD, CD or a Blu-Disc player, a game console, a set-top-box for receiving cable or satellite signals, etc...) connected via a video link to the TV set 101 and via audio links to six loudspeakers 102. Media devices are, to the purpose of the present invention, devices which are able to process multimedia contents comprising audio and video contents, in particular 3D video contents.

The video link can be an RF (Radio frequency) video link, a HDMI connection, S-Video, Composite Video, or other form of video link. The audio link can be a wireless or cable link.

In the following embodiment, one of the media devices 100 is a set-top-box (STB) 1000.

STB 1000 receives broadcast stereoscopic TV signals from an antenna 103. Stereoscopic TV signals are preferably transmitted as digital signals in a TV transponder comprising audio, 3D video and metadata. STB 1000 decodes the received TV signals and provides output stereoscopic video signals to the TV set 101 over the above mentioned video link and output audio signals to the loudspeakers 102 over the above mentioned audio link.

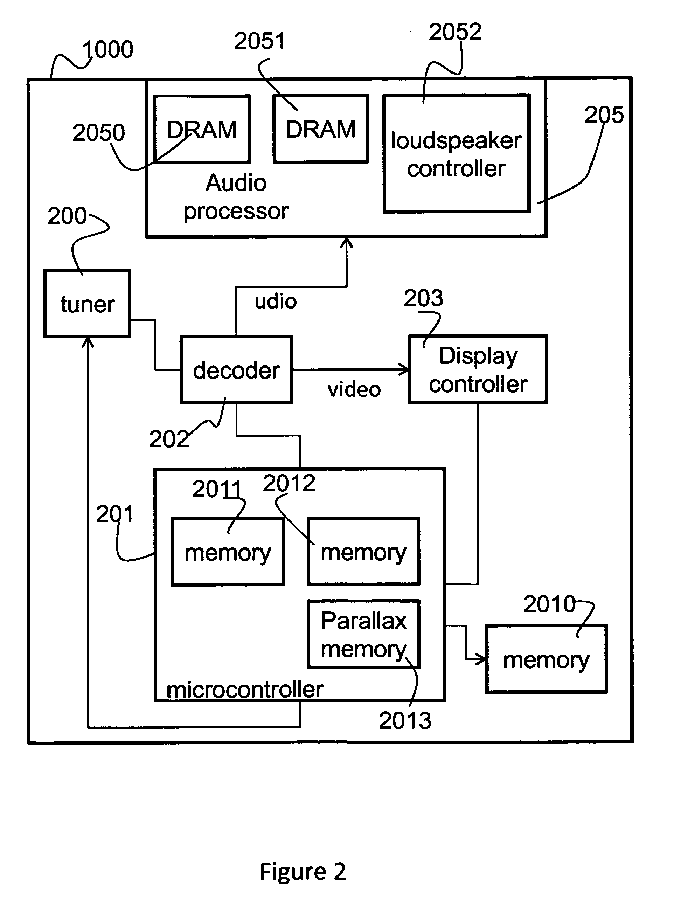

With reference to figure 2, in order to implement the above actions, STB 1000 comprises a receiver 200 (in particular a tuner) connected to the antenna 103 which receives TV signals.

Tuner 200 is controlled by a microcontroller 201 in order to tune on the desired TV channel, whose TV signal is output to a decoder 202 that decodes it and outputs audio and video. The decoded stereoscopic video signal is provided to a display controller 203 which provides video output signals over the video link connecting set-top-box 100 and TV set 101. The decoded audio signal is provided to an audio processor 205 comprising a first memory area 2050, a second memory area 2051 and a loudspeaker controller 2052 which provides audio output signals over the audio link to the six loudspeakers 102. Memory areas 2050 and 2051 are preferably of the DRAM (Dynamic Random Access Memory) type.

Microcontroller 201 is operatively connected, e.g. via an I2C bus, to the audio processor 205 and to the display controller 203 for controlling respectively delivery of the audio to the loudspeakers 102 and of video to the TV set 101.

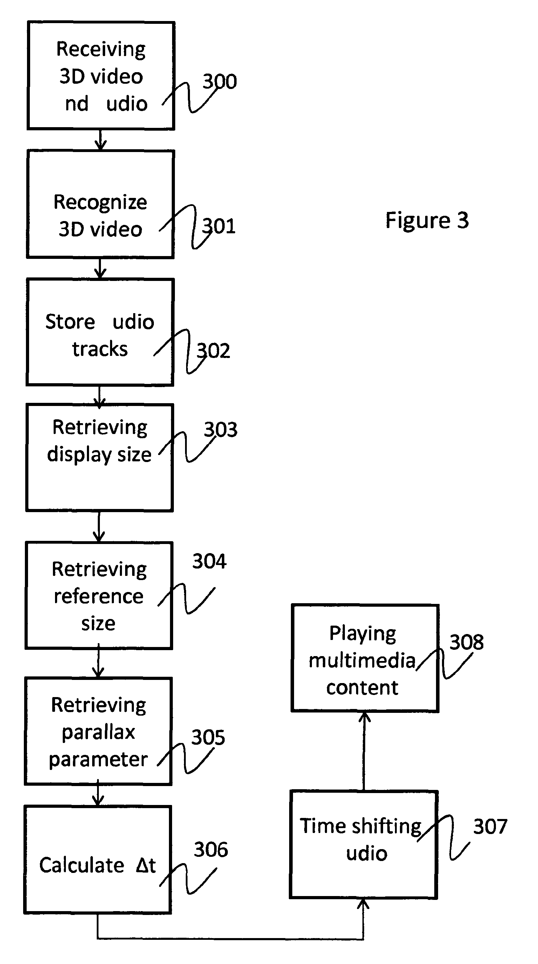

By means of proper code portions stored in memory area 2010, the microcontroller 201 is configured to implement the method for playing multimedia contents described in the following with reference to the flowchart of figure 3.

The method starts at step 300, when microcontroller 201 controls the tuner 200 in order to tune it on a desired TV channel that, in the following example, is supposed to broadcast a multimedia content comprising a 3D video component and an associated audio component.

At step 301, decoder 202 receives the TV signal, recognizes that the received multimedia content comprises a 3D video content and provides the relative information to the microcontroller 201, so that the latter can control the audio processor in the proper way. Decoder 202 provides the decoded video to display controller 203 and the decoded audio to audio processor 205.

At step 302 the audio processor 205 stores in memory area 2050 the decoded audio component. In one embodiment, the audio component comprises six audio tracks, one for each loudspeaker 102; therefore memory area 2050 is suitable for storing up to 200ms of audio tracks. In case of digital audio, each audio track preferably comprises at least an audio packet with a time stamp indicative of the playing time of the audio track; time stamps are therefore used to synchronize audio and video during playing of the multimedia content.

In an alternative embodiment, the audio component is a mono or a stereo audio respectively with one or two audio tracks; in this embodiment, the audio processor generates (in a per se known way) six audio tracks starting from the received one or two audio tracks. The generated audio tracks are then stored in memory 2050.

At step 303, microcontroller 201 starts a communication process with the TV set 101 via the video link. In the preferred embodiment, microcontroller 201 queries the TV set 101 in order to retrieve a parameter relative to the size of the image currently displayed on the screen 1010 of TV set 101. As an example, TV set 101 can provide the information that the user is currently viewing an image in 4:3 format on a 32 inches display. In an alternative embodiment, the parameter provided to the STB 1000 by TV set 101 is more simply the diagonal size of the screen of TV set 101, for example 32 inches. This parameter is stored in a memory area 2011 of microcontroller 201.

At step 304, microcontroller 201 analyzes the metadata of the TV signal to retrieve information about a reference display size for which the video component of the TV signal is optimized, for example 50 inches. If this information is available, it is stored in memory area 2012 of the microcontroller 201. In an alternative embodiment, the reference display size can be set by a user via the graphic user interface (GUI) of STB 1000. If no information on the reference display size is retrieved from the multimedia content or from the user, in the preferred embodiment, microcontroller will put in memory 2012 a preset value.

At step 305 microcontroller 201 retrieves a parallax variation parameter that is preferably set by a user via the GUI. As it is well known to those skilled in the art of 3D contents, the parallax is a parameter that indicates the distance between left and right images of a stereoscopic video frame; by changing the parallax, images are perceived as having more or less depth. By means of keys and buttons of a remote control, the user selects the preferred "visual depth" and therefore implicitly sets the parallax variation parameter, which is a relative parameter that takes care of the variation of parallax requested by the user. In one embodiment, this parallax variation parameter ranges from -5 to +5, whereby the parallax variation parameter has the value 0 if the user does not change the parallax. The parallax variation parameter is negative when the user reduces the visual depth and is positive when the user increases the visual depth of the 3D content.

Microcontroller 201 stores the parallax parameter in parallax memory area 2013.

At step 306, microcontroller 201 analyzes information stored in memory areas 2011, 2012 and 2013, i.e. the TV set diagonal size, the reference display size and the parallax parameter, in order to calculate a time interval value Δt for each of the audio tracks of the audio components.

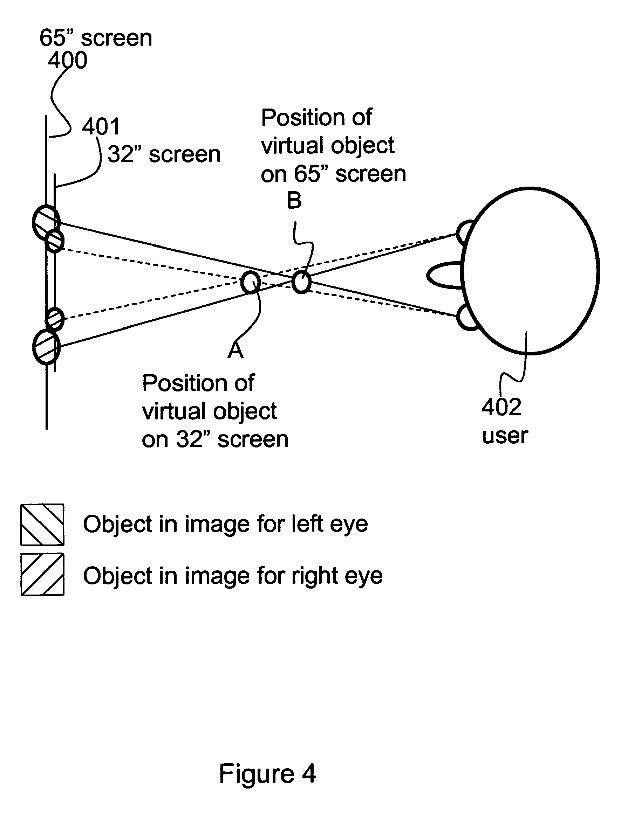

As an example illustrated with reference to fig. 4, if the 3D video component received is optimized for being displayed on a 32 inches TV set 400 and the TV set is a 65 inches TV set 401, than the user 402 will perceive an increased visual depth of the objects (objects moves from position A to position B), therefore microcontroller will move back in time, i.e. packets' time stamp is decreased, the audio tracks to be provided to the front loudspeakers. In this way the front sound is heard before by the viewer. Alternatively, in such a case the audio tracks to be delivered to the rear loudspeakers are processed so that the time stamp is increased, therefore moving forward in time (sound is heard later) the relative audio track. As a further alternatives both audio tracks intended for front and rear loudspeakers are modified and time shifted; in this embodiment, audio tracks intended for front and rear loudspeakers are processed in different ways, in particular if they are both time shifted, they are time shifted of different amounts.

The overall effect is that the virtual object is perceived as closer to the viewer.

In one embodiment, the time interval value Δt will depend on the ratio between reference and actual size of the screen, i.e. the values stored in memory area 2011 and 2012. If the user has changed the parallax by requesting to reduce the depth of 3D objects, than audio tracks will be changed accordingly moving back and forward in time one or more audio tracks.

In general, if we consider the source of a sound as an acoustic virtual object, by delaying sound in rear loudspeakers it is possible to create impression of moving rear loudspeakers back and in the same time moving virtual acoustic objects closer to the position of visual virtual object.

By delaying sound in front loudspeakers it is possible to create impression of moving virtual acoustic objects in the direction of the screen. For human brain is important time difference between sounds from different directions to detect sound source position. Sound speed in the air is about 340 m/s, which means that sound moves 1 m in about 3 ms. Based on this information, microcontroller 201 therefore can calculates time shift Δt; as an example, by delaying of 3 ms sound from one of loudspeakers, the virtual sound source is moved of about 1 m.

After that, microcontroller 201 modifies (step 307) the audio tracks stored in memory area 2050 by changing the time stamp associated to each audio packet. In detail, the time stamp is modified according to time interval value Δt calculated at step 306, and the modified audio tracks are stored in memory area 2051.

At step 308, microcontroller 201 controls loudspeaker controller 2052 and display controller 203 so that audio and video to be played at the same time are provided respectively to the loudspeakers 102 and to the TV set 101.

In one embodiment, in addition to time shifting the audio tracks, microcontroller 201 controls the loudspeaker controller 2052 so as to modify amplitude of the same; in this way microcontroller 201 can better control movement of virtual acoustic objects in the space, so as to allow a better viewing experience.

In case the user has set a variation parallax parameter different from zero, i.e. it has modified the view to have more or less 3D effect, then microcontroller 101 controls display controller 203 so as to modify at least one of the right and left image of each video frame so as to obtain the 3D effect requested by the user.

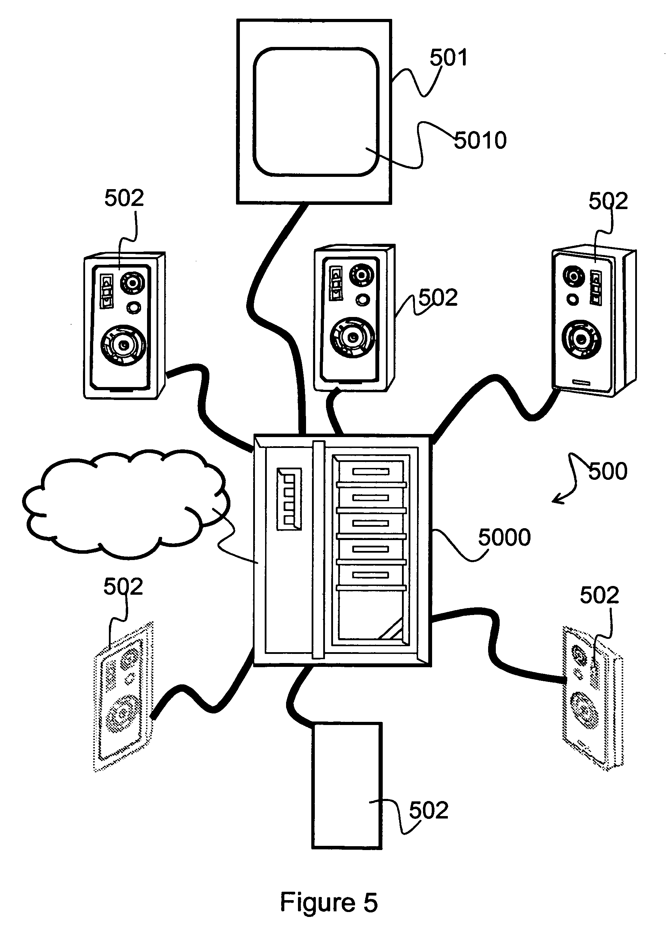

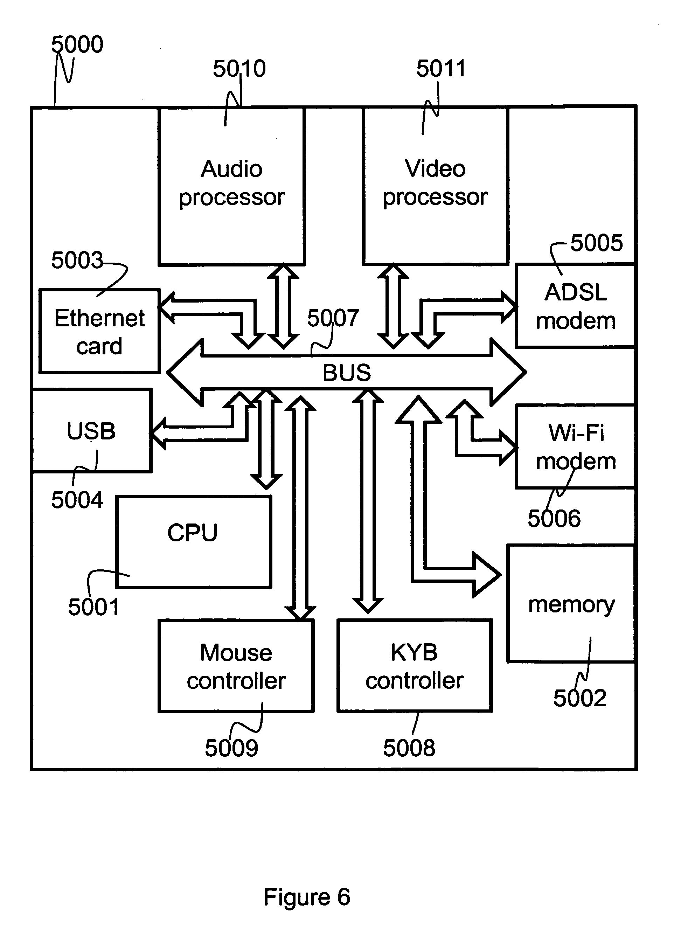

With reference to figure 5 and 6, in a further embodiment, the invention is directed to a multimedia system 500, wherein a media center (or more in general a PC suitable to mange audio and video) 5000 delivers 3D video contents to a monitor 501 and audio to six loudspeakers 502. The number of loudspeakers is not limitative of this embodiment.

Media center 5000 comprises a processor 5001 suitable to execute code portions stored in memory unit 5002 (e.g. a hard disk or a mass memory).

In particular processor 5001 executes code portions that relate to a software multimedia application for managing multimedia contents comprising 3D video contents and audio.

Media center 5000 also comprises a plurality of receiving unit suitable for receiving multimedia contents comprising 3D video and audio. In the embodiment of figure 6, the multimedia center 5000 comprises:
- an Ethernet card 5003 for connection to an Ethernet network (e.g. a local area network, LAN), so as to receive multimedia contents from a computer connected to the Ethernet network,
- a USB port 5004 for direct connection to external devices like hard disks, mass memories, smart phones, so as to receive multimedia contents from these devices,
- an ADSL modem 5005 and a Wi-Fi modem 5006 (i.e. a modem operating according to IEEE 802.11 standards) for connection to external networks, like the Internet, and reception of multimedia contents from these networks.

In one embodiment, processor 5001 executes the multimedia application stored in memory 5002 and communicates with external devices via one or more of the receiving units 5003-5006 so as to receive multimedia contents.

When a receiving unit receives data packets relative to the multimedia contents, it transmits them to memory unit 5002 and informs processor 5001 that multimedia packets are available.

Receiving units 5003-5006, processor 5001 and memory unit 5002 are operatively connected via one or more connection buses, i.e. a connection lines, 5007.

In this embodiment, processor 5001 processes the received data packets and determines that some of them are audio packets and others are video packets relating to a 3D content.

In order to process the audio packets, processor 5001 retrieves information relating to the size of the image displayed; as an example the user operating the multimedia center 5000 can request to view the 3D video at full screen on monitor 501. Alternatively the user can request to view the 3D video in windows of size 200x200 pixels or of any other dimension comprised between zero and the size of the screen 5010 of monitor 501.

As it is well known to those experts of computer science, a computer can display several contents in different areas of the screen according to user inputs. Multimedia center 5000 therefore comprises a keyboard controller 5008 and a mouse controller 5009 for receiving user inputs and allowing displaying of the 3D video content in windows of different sizes, i.e. with images of different sizes.

Processor 5001 is therefore able to know the current size of the displayed image of the 3D video content.

As explained above, objects visual depth perceived by a viewer viewing a 3D video depends on the size of the displayed image; since the user is given the possibility to change the image size, in the preferred embodiment; multimedia application executed by processor 5001 also provides the user the possibility to change the perceived visual depth. In other words, the user is given the possibility to change the parallax as above described with reference to the embodiment of figures 1-4.

Parallax user settings are stored in memory area 5002 and can be used by processor 5001 to process audio and video packets.

In the preferred embodiment, processor 5001 also retrieves information relative to an image reference size for which the multimedia content was optimized, e.g. 15 inch size. This information can be obtained by processing the received data packets of the multimedia content or can be a piece of information provided by the user via keyboard or mouse. Alternatively this piece of information can be a preset value.

Based on the information on the current size of the displayed video, on the image reference size of the received 3D video content and on the parallax preference expressed by the user, processor 5001 is adapted to process the received audio packets so as to synchronize them with the current viewing settings.

In one embodiment, the received audio packets comprise information relative to a plurality of audio tracks (preferably at least five). Processor 5001 processes the audio data packets (in particular it changes the time stamps) so as to time shift different audio tracks intended for different loudspeakers. Processor 5001 then provides the processed audio packets to an audio processor 5010 that generates the relative output audio signals. In a preferred embodiment, processor 5001 also modifies the data packets so as to change amplitude of one or more audio tracks.

In another embodiment, which is preferred when the received audio packets comprise information relative to only one or two audio tracks, processor 5001 calculates the time shift Δt and/or a variation of amplitude for each audio track. Processor 5001 then provides the audio processor with the received audio packets and with the calculated information. Audio processor 5010 will then process the audio packets so as to provide the loudspeakers with audio tracks that are time shifted and/or changed in amplitude with respect to the audio tracks of the received audio packets. In case the received audio packets are relative to a simple mono or stereo audio, audio processor 5010 will then generate, in a per se known way, a plurality of audio tracks to be provided to a plurality of loudspeakers (e.g. the six loudspeakers of figure 5) and will then time shift and/or modulate the amplitude of the different audio tracks intended for the different loudspeakers.

Finally, processor 5001 will also process the received video packets according to the user inputs (e.g. parallax information and display window size) and provides the processed data packets to the video processor 5011 that will then output a video signal for monitor 501.

Also if not shown in figure 5, a clock generates a synchronization signal that is used by video processor 5011 and audio processor 5010 to output video and audio.

The purpose of the Abstract is to enable the public, and especially the scientists, engineers, and practitioners in the art who are not familiar with patent or legal terms or phraseology, to determine quickly from a cursory inspection, the nature and essence of the technical disclosure of the application. The Abstract is neither intended to define the invention of the application, which is measured by the claims, nor is it intended to be limiting as to the scope of the invention in any way.

Still other features and advantages of the claimed invention will become readily apparent to those skilled in this art from the above detailed description describing preferred embodiments of the invention, simply by way of illustration of the best mode contemplated by carrying out the invention. As it can readily be realized, the invention is capable of modification in various obvious respects all without departing from the invention. Accordingly, the drawings and description of the preferred embodiments are to be regarded as illustrative in nature, and not as restrictive in nature and various changes may be made without departing from the scope of the invention as defined by the following claims.

As an example, TV set 101 can be replaced by any device suitable to display video signals received by set-top-box 100, e.g. a video projector or a computer monitor.

Microcontroller 201, and in general any block of the STB 1000 above described, can be replaced by a control unit comprising several and interconnected components.

The TV set diagonal size and the reference display size can be any parameter, or set of parameter, related to the physical sizes of to the TV set 101 connected and to a reference display respectively, for example height and length of their screen.

In an alternative embodiment, the TV set diagonal size and/or the reference display size may be provided by the user and retrieved by the microcontroller 201.

Notwithstanding, the invention has been described with reference to a STB 1000, it is clear that the invention is in general intended to cover any an audio-video system or unit (in particular a multimedia device 100), comprising
a receiving unit (e.g. a tuner or a USB port or an Ethernet card or an interface receiving data from a laser unit reading a Blu-Ray or DVD or other optical support) for receiving an audio component and a 3D video component of a multimedia content,
a video processor operatively connected to the receiving unit for processing said 3D video content and transmitting a video signal to an external device for displaying on a screen,
an audio processor operatively connected to the receiving unit for processing said audio component and to deliver audio tracks to a plurality of loudspeakers,
a control unit operatively connected to the receiving unit and to the audio processor for controlling delivery of audio tracks to said plurality of loudspeakers according to information embedded in the multimedia content,
the audio video unit being characterized by further comprising
a first memory area, operatively connected to said control unit, for storing a parameter associated to the physical size of an image currently displayed on said screen,
whereby the control unit is configured to control said audio processor, so as to time shift at least one of said audio tracks based on said parameter.

More in general, the invention is directed to an audio-video unit or system suitable to implement the method above described and as claimed in the annexed claims.

Also the steps of the method above described with reference to figure 3 shall not be intended to be all necessary and essential for implementing the invention as it appears from the description and the annexed claims. As an example, audio tracks can be time shifted also without considering parallax parameters provided by the user (step 305 of figure 3). In this case, the method is not optimized, but is still working.

While in the above description, the microcontroller 201 executes the steps of the method for playing multimedia contents by means of code portions stored in a local memory, it can be easily recognized, by one skilled in the art, that the aforementioned system and method for playing multimedia contents may be performed and/or controlled by one or more computer programs. Such computer programs are typically executed by utilizing the computing resources of a processing unit which can be embedded within various video signal receivers, such as personal computers, personal digital assistants, cellular telephones, receivers and decoders of digital television, video display units or the like. The computer programs can be stored in a non-volatile memory, for example a flash memory or in a volatile memory, for example RAM and are executed by the processing unit. These memories are exemplary recording media for storing computer programs comprising computer-executable instructions performing all the steps of the computer-implemented method according the technical concept presented herein.

## Claims

1. A method for playing a multimedia content comprising a 3D stereoscopic video component and an audio component, wherein the 3D stereoscopic video component is processed so as to deliver a video signal on a video output to be displayed on a screen (1010) and wherein the audio component is processed so as to deliver a plurality of audio tracks to a plurality of loudspeakers (102),
the method comprising processing said audio component so as to deliver said plurality of audio tracks based on a parameter associated to the size of an image of the video signal displayed on said screen (1010),
the method being **characterized in that** it further comprises the step of retrieving (305) a parallax parameter, for changing the distance between left and right images of a stereoscopic video frame whereby said audio tracks are delivered to the loudspeakers (102) also based on said parallax parameter, wherein said parallax parameter is provided by a user.

2. The method of claim 1, wherein processing of said audio component comprises the steps of storing (302) a plurality of temporary audio tracks, modifying (307) said audio tracks by time shifting at least one of said temporary audio tracks, delivering the modified audio tracks.

3. The method of claim 2, wherein only a subset of said plurality of temporary audio tracks is time shifted.

4. The method of claim 2 or 3, further comprising the step of changing volume of at least one of said temporary audio tracks.

5. The method according to claim 1 or 2 or 3 or 4, wherein said parameter is a diagonal size of said screen (1010).

6. The method according claim 1 or 2 or 3 or 4 or 5, wherein said audio tracks are delivered also based on a second parameter associated to an image reference size, in particular an image reference size for which said multimedia content is optimized.

7. The method of claim 6 when depending on claim 2, wherein audio tracks to be provided to frontal loudspeakers are moved forward in time if the size of the image displayed is bigger than said image reference size.

8. The method of claim 6 or 7, wherein said second parameter is retrieved from said multimedia content.

9. The method of claim 6 or 7 or 8, wherein said second parameter is a diagonal size of a reference screen.

10. The method according to any of the previous claims, wherein said parameter is provided by a user.

11. An audio-video system (100), comprising
a receiving unit (200) for receiving an audio component and a 3D stereoscopic video component of a multimedia content,
a video processor (202, 203) operatively connected to the receiving unit for processing said 3D stereoscopic video component and transmitting a video signal to an external device (101) for displaying on a screen (1010),
an audio processor (202, 205) operatively connected to the receiving unit for processing said audio component and to deliver audio tracks to a plurality of loudspeakers (102),
a control unit (201) operatively connected to the receiving unit (200) and to the audio processor (205) for controlling delivery of audio tracks to said plurality of loudspeakers (102) according to information embedded in the multimedia content,
the audio video unit (100) being **characterized by** further comprising
a first memory area, operatively connected to said control unit (201), for storing a parameter associated to the physical size of an image of the video signal displayed on said screen,
a parallax memory area for storing a parallax parameter, for changing the distance between left and right images of a stereoscopic video frame and set by a user;
whereby the control unit (201) is configured to control said audio processor (202,205) so as to deliver said audio tracks based on said stored parameter and also based on said parallax parameter.

12. The video system of claim 11, further comprising a receiver for receiving inputs from a user and wherein said control unit (201) is adapted to control said audio processor (202, 205) and said video processor (202, 203) in order to implement the method according to any of claims 1 to 10.

13. A computer program comprising program code means for performing all the steps of the method according to any of claims 1-10 when said program is run on a computer.

14. A computer readable medium storing the computer program of claim 13.

## Patentansprüche

1. Verfahren zum Abspielen eines Multimediainhalts mit einer 3D stereoskopischen Videokomponente und einer Tonkomponente, wobei die 3D stereoskopische Videokomponente verarbeitet wird, um ein Videosignal an eine Videoausgabe zu liefern, um auf einem Bildschirm (1010) angezeigt zu werden, und wobei die Tonkomponente verarbeitet wird, um eine Vielzahl von Tonspuren an eine Vielzahl von Lautsprechern (102) zu liefern,
wobei das Verfahren ein Verarbeiten der Tonkomponente aufweist, um die Vielzahl von Tonspuren basierend auf einem Parameter zu liefern, der der Größe eines Bildes des auf dem Bildschirm (1010) angezeigten Videosignals zugeordnet ist,
wobei das Verfahren **dadurch gekennzeichnet ist, dass** es weiterhin den Schritt des Abrufens (305) eines Parallaxenparameters zum Verändern des Abstands zwischen linken und rechten Bildern eines stereoskopischen Videoeinzelbildes aufweist, wobei die Tonspuren auch basierend auf dem Parallaxenparameter an die Lautsprecher (102) geliefert werden und wobei der Parallaxenparameter durch einen Benutzer bereitgestellt wird.

2. Verfahren nach Anspruch 1, wobei ein Verarbeiten der Tonkomponente die Schritte des Speicherns (302) einer Vielzahl temporärer Tonspuren, Veränderns (307) der Tonspuren durch Zeitverschieben wenigstens einer der temporären Tonspuren und Lieferns der veränderten Tonspuren aufweist.

3. Verfahren nach Anspruch 2, wobei nur eine Teilmenge der Vielzahl temporärer Tonspuren zeitverschoben wird.

4. Verfahren nach Anspruch 2 oder 3, das weiterhin den Schritt des Änderns einer Lautstärke wenigstens einer der temporären Tonspuren aufweist.

5. Verfahren nach Anspruch 1 oder 2 oder 3 oder 4, wobei der Parameter eine Diagonalgröße des Bildschirms (1010) ist.

6. Verfahren nach Anspruch 1 oder 2 oder 3 oder 4 oder 5, wobei die Tonspuren auch basierend auf einem zweiten Parameter geliefert werden, der einer Bildreferenzgröße, insbesondere einer Bildreferenzgröße, für welche der Multimediainhalt optimiert ist, zugeordnet ist.

7. Verfahren nach Anspruch 6, wenn dieser von Anspruch 2 abhängt, wobei Tonspuren, die Frontlautsprechern bereitzustellen sind, in der Zeit vorwärts bewegt werden, wenn die Größe des angezeigten Bildes größer als die Bildreferenzgröße ist.

8. Verfahren nach Anspruch 6 oder 7, wobei der zweite Parameter von dem Multimediainhalt abgerufen wird.

9. Verfahren nach Anspruch 6 oder 7 oder 8, wobei der zweite Parameter eine Diagonalgröße eines Referenzbildschirms ist.

10. Verfahren nach einem der vorstehenden Ansprüche, wobei der Parameter durch einen Benutzer bereitgestellt wird.

11. Ton-Videosystem (100), das aufweist:
eine Empfangseinheit (200) zum Empfangen einer Tonkomponente und einer 3D stereoskopischen Videokomponente eines Multimediainhalts,
einen Videoprozessor (202, 203), der mit der Empfangseinheit zum Verarbeiten der 3D stereoskopischen Videokomponente und zum Übertragen eines Videosignals an eine externe Vorrichtung (101) zum Anzeigen auf einem Bildschirm (1010) operativ verbunden ist,
einen Tonprozessor (202, 205), der mit der Empfangseinheit zum Verarbeiten der Tonkomponente und zum Liefern von Tonspuren an eine Vielzahl von Lautsprechern (102) operativ verbunden ist,
eine Steuereinheit (201), die mit der Empfangseinheit (200) und mit dem Tonprozessor (205) zum Steuern eines Lieferns von Tonspuren an die Vielzahl von Lautsprechern (102) gemäß in dem Multimediainhalt eingebetteter Information operativ verbunden ist,
wobei die Ton-Videoeinheit (100) **dadurch gekennzeichnet ist, dass** sie weiterhin aufweist:
einen ersten Speicherbereich, der mit der Steuereinheit (201) operativ verbunden ist, zum Speichern eines Parameters, der der physischen Größe eines Bildes des auf dem Bildschirm angezeigten Bildsignals zugeordnet ist, und
einen Parallaxenspeicherbereich zum Speichern eines Parallaxenparameters zum Ändern des Abstands zwischen linken und rechten Bildern eines stereoskopischen Videoeinzelbildes, der durch einen Benutzer gesetzt ist;
wobei die Steuereinheit (201) konfiguriert ist, den Tonprozessor (202, 205) zu steuern, um die Tonspuren basierend auf dem gespeicherten Parameter und auch basierend auf dem Parallaxenparameter zu liefern.

12. Videosystem nach Anspruch 11, das weiter einen Empfänger zum Empfangen von Eingaben von einem Benutzer aufweist und wobei die Steuereinheit (201) angepasst ist, den Tonprozessor (202, 205) und den Videoprozessor (202, 203) zu steuern, um das Verfahren nach einem der Ansprüche 1 bis 10 zu implementieren.

13. Computerprogramm, das Programmcodemittel zum Durchführen aller Schritte des Verfahrens nach einem der Ansprüche 1 bis 10 aufweist, wenn das Programm auf einem Computer ausgeführt wird.

14. Computerlesbares Medium, das das Computerprogramm nach Anspruch 13 speichert.

## Revendications

1. Procédé pour la lecture d'un contenu multimédia comprenant une composante vidéo stéréoscopique 3D et une composante audio, dans lequel la composante vidéo stéréoscopique 3D est traitée de façon à délivrer un signal vidéo sur une sortie vidéo à afficher sur un écran (1010) et dans lequel la composante audio est traitée de façon à délivrer une pluralité de pistes audio à une pluralité de haut-parleurs (102),
le procédé comprenant de traiter ladite composante audio de façon à délivrer ladite pluralité de pistes audio sur la base d'un paramètre associé à la dimension d'une image du signal vidéo affichée sur ledit écran (1010),
le procédé étant **caractérisé en ce qu'**il comprend, de plus, l'étape de récupération (305) d'un paramètre de parallaxe de telle façon que lesdites pistes audio soient délivrées aux haut-parleurs (102) en vue de modifier la distance entre les images de droite et de gauche d'une trame vidéo stéréoscopique sur la base également dudit paramètre de parallaxe, ledit paramètre de parallaxe étant fourni par un utilisateur.

2. Procédé selon la revendication 1, dans lequel le traitement de ladite composante audio comporte les étapes comprenant de stocker (302) une pluralité de pistes audio temporaires, de modifier (307) lesdites pistes audio en décalant dans le temps au moins l'une desdites pistes audio temporaires, de délivrer les pistes audio modifiées.

3. Procédé selon la revendication 2, dans lequel seulement un sous-ensemble de ladite pluralité de pistes audio temporaires est décalé dans le temps.

4. Procédé selon la revendication 2 ou 3 comprenant, de plus, l'étape consistant à modifier le volume d'au moins l'une desdites pistes audio temporaires.

5. Procédé selon la revendication 1 ou 2 ou 3 ou 4, dans lequel ledit paramètre est une dimension diagonale dudit écran (1010).

6. Procédé selon la revendication 1 ou 2 ou 3 ou 4 ou 5, dans lequel lesdites pistes audio sont délivrées également sur la base d'un second paramètre associé à une dimension de référence d'image, en particulier une dimension de référence d'image pour laquelle ledit contenu multimédia est optimisé.

7. Procédé selon la revendication 6 lorsque dépendante de la revendication 2, dans lequel les pistes audio à fournir à des haut-parleurs frontaux sont déplacées vers l'avant dans le temps si la dimension de l'image affichée est plus grande que ladite dimension de référence d'image.

8. Procédé selon la revendication 6 ou 7, dans lequel ledit second paramètre est extrait dudit contenu multimédia.

9. Procédé selon la revendication 6 ou 7 ou 8, dans lequel ledit second paramètre est une dimension de diagonale d'un écran de référence.

10. Procédé selon l'une quelconque des revendications précédentes, dans lequel ledit paramètre est fourni par un utilisateur.

11. Système audio-vidéo (100), comportant :
- une unité de réception (200) pour recevoir une composante audio et une composante vidéo stéréoscopique 3D d'un contenu multimédia,
- un processeur vidéo (202, 203) connecté fonctionnellement à l'unité de réception en vue de traiter ladite composante vidéo stéréoscopique en 3 D et de transmettre un signal vidéo à un dispositif extérieur (101) en vue d'un affichage sur un écran (1010),
- un processeur audio (202, 205) connecté fonctionnellement à l'unité de réception pour traiter ladite composante audio et pour délivrer des pistes audio à une pluralité de haut-parleurs (102),
- une unité de commande (201) connectée fonctionnellement à l'unité de réception (200) et au processeur audio (205) pour commander la délivrance des pistes audio à ladite pluralité de haut-parleurs (102) selon une information insérée dans le contenu multimédia,
l'unité audio et vidéo (100) étant **caractérisée par** le fait de comporter, de plus,
- une première zone de mémoire connectée fonctionnellement à ladite unité de commande (201) pour stocker un paramètre associé à la dimension physique d'une image du signal vidéo affiché sur ledit écran,
- une zone de mémoire de parallaxe pour stocker un paramètre de parallaxe permettant de modifier la distance entre des images de gauche et de droite d'une trame vidéo stéréoscopique et établi par un utilisateur ;
de sorte que l'unité de commande (201) est configurée pour commander ledit processeur audio (202, 205) de façon à délivrer lesdites pistes audio sur la base dudit paramètre stocké et également sur la base dudit paramètre de parallaxe.

12. Système vidéo selon la revendication 11 comportant, de plus, un récepteur pour recevoir des entrées provenant d'un utilisateur et dans lequel ladite unité de commande (201) est conçue pour commander ledit processeur audio (202, 205) et ledit processeur vidéo (202, 203) afin de mettre en oeuvre le procédé selon l'une quelconque des revendications 1 à 10.

13. Programme informatique comprenant des moyens de code de programme permettant d'exécuter toutes les étapes du procédé selon l'une quelconque des revendications 1 à 10 lorsque ledit programme est mis en oeuvre sur un ordinateur.

14. Support exploitable par ordinateur stockant le programme informatique selon la revendication 13.
